# EUROPEAN PATENT APPLICATION

(11) **EP 3 171 521 A1**
(43) Date of publication of application: **24.05.2017**
(21) Application number: 16197406.8
(22) Date of filing: 04.11.2016
(51) Int. Cl.: H04B 1/74, H04B 7/185

(54) **SYSTEMS AND METHODS FOR REDUCING COMMUNICATIONS INTERRUPTIONS IN REDUNDANCY SWITCHING EVENTS**

(30) Priority: 20.11.2015 US 201514948116
(71) Applicant: Honeywell International Inc., Morris Plains, NJ 07950 (US)
(72) Inventor: KROENING, Adam M., Morris Plains, NJ New Jersey 07950 (US); FORNEY, Sean, Morris Plains, NJ New Jersey 07950 (US)
(74) Representative: Houghton, Mark Phillip

(57) **Abstract**

Systems and methods for reducing communications interruptions in redundancy switching events are provided. In certain embodiments, a method for switching communication paths through a circulator network includes identifying a first failed component, wherein the first failed component is connected to a first communication path, wherein the multiple components includes standby components that are not coupled to communication paths and active components that are coupled to communication paths, wherein a standby component that has not previously failed and an active component that has not experienced a failure are operable components. Further, the method includes switching circulators in the circulator network such that a first operable component is connected to the first communication path and the failed component is disconnected from the first communication path, wherein the communication paths other than the first communication path are disrupted for less than or equal to a single switching event.

## Description

### BACKGROUND

In certain communication networks, certain communication nodes in the network are not easily accessible for repairs in the event that equipment on the communication node experiences a failure. For example, communication nodes located in space are practically inaccessible and, as such, that failed equipment cannot be repaired. To prevent the failures from affecting the operation of the communication node, the communication equipment on the communication node includes standby equipment that increases the redundancy of any communication paths through the communication equipment. To control which communication paths are used through the communication equipment, a switch network is used to switch a communication path from failed equipment to standby equipment.

In at least one example, low noise amplifiers are prone to failures. Thus, a communication node will include a number of spare amplifiers. For example, at any given time, the communication node may use at most M amplifiers. The communication equipment may include N amplifiers such that when any of the M amplifiers experiences a failure, the switch network switches the communication path through one of the N amplifiers that is not currently active and switches the communication path away from the amplifier that failed. This redundant configuration of amplifiers and switch networks may be referred to as N for M redundancy (for example "10 for 8" redundancy). A switch network can be implemented using a network of switching ferrite circulators.

In certain implementations, a system may be constrained by communication requirements that call for the completion of switching from a failed component to a working component within a particular time, such that the communications through the switch network are not interrupted. However, switching the paths through a switch network having many circulators may cause the switching of multiple different circulators, which may cause the time to exceed the time constraint when switching from a failed component to a working component.

### SUMMARY

Systems and methods for reducing communications interruptions in redundancy switching events are provided. In certain embodiments, a method for switching communication paths through a circulator network includes identifying a first failed component in a plurality of components, wherein the first failed component is connected to a first communication path in a plurality of communication paths, wherein the plurality of components comprises one or more standby components that are not coupled to communication paths and one or more active components that are respectively coupled to one or more communication paths in the plurality of communication paths, wherein a standby component in the one or more standby components that has not previously failed and an active component in the one or more active components that has not experienced a failure are a plurality of operable components. Further, the method includes switching circulators in the circulator network such that a first operable component in the plurality of operable components is connected to the first communication path in the plurality of communication paths and the failed component is disconnected from the first communication path, wherein the communication paths other than the first communication path in the plurality of communication paths are disrupted for less than or equal to a single switching event.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a block diagram of a redundant switching network in one embodiment described in the present disclosure;
Figures 2A and 2B illustrate a schematic for an implementation of a circulator module in a switching network and of a circulator module in one embodiment described in the present disclosure;
Figure 3 illustrates the implementation of a circulator module in a path module in one embodiment described in the present disclosure;
Figures 4A-4F illustrate the progressive switching of circulators in a redundancy network in one embodiment described in the present disclosure;
Figure 5 illustrates a timing graph for switching within a redundancy network in one embodiment described in the present disclosure;
Figures 6A-6B illustrate the implementation of a circulator module in a path module in one embodiment described in the present disclosure;
Figures 7A-7D illustrate the progressive switching of circulators in a redundancy network in one embodiment described in the present disclosure;
Figures 8A-8H illustrate different combinations of switching circulators as described in embodiments described in the present disclosure;
Figure 9 illustrates a schematic for an implementation of a redundancy network in one embodiment described in the present disclosure;
Figure 10 illustrates a schematic for an implementation of a redundancy network in one embodiment described in the present disclosure;
Figure 11 illustrates a schematic for an implementation of a redundancy network in one embodiment described in the present disclosure;
Figure 12 illustrates a schematic for an implementation of a redundancy network in one embodiment described in the present disclosure; and
Figure 13 is a flow diagram for a method for switching communication paths through a circulator redundancy network in one embodiment described in the present disclosure.
In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Embodiments described herein provide systems and methods for increasing communications connectivity in serial switching events. As such the present disclosure defines switching schemes for quickly switching networks such that time requirements for switching may be satisfied. Various implementations are described for providing circulator modules that can be connected to one another to form N for M redundancy networks. The different circulator modules are connected to one another using short waveguide segments between interconnection ports. Further, matched loads are used on any unneeded ports and unconnected interconnection ports. For example, a circulator module may have N/2 input ports and N/2 output ports. When two of the circulator modules are connected together using short waveguide segments between interconnection ports, the resulting network has M input ports and M output ports and multiple unconnected interconnection ports. The network may be configured into an N for M redundancy network by terminating the unconnected interconnection ports and N-M output ports with matched loads.

In certain implementations, when the redundancy network is connected to N components, where there are M communicative paths through the network, where N > M, there are N-M spare components. When one of the N components fails in one of the M communicative paths, the M communicative paths through the redundancy network may be rearranged in such a way that the interruption of the altered communication paths are reduced. For example, the communication paths may be interrupted for a negligible duration of time on the order of a few microseconds. In certain implementations, a first failure causes communication paths through non-failed components to experience interruptions having durations equal to the amount of time to switch a single circulator in a module. In other implementations, switching of the communicative path from a first failed component to a redundant component does not interrupt other working components.

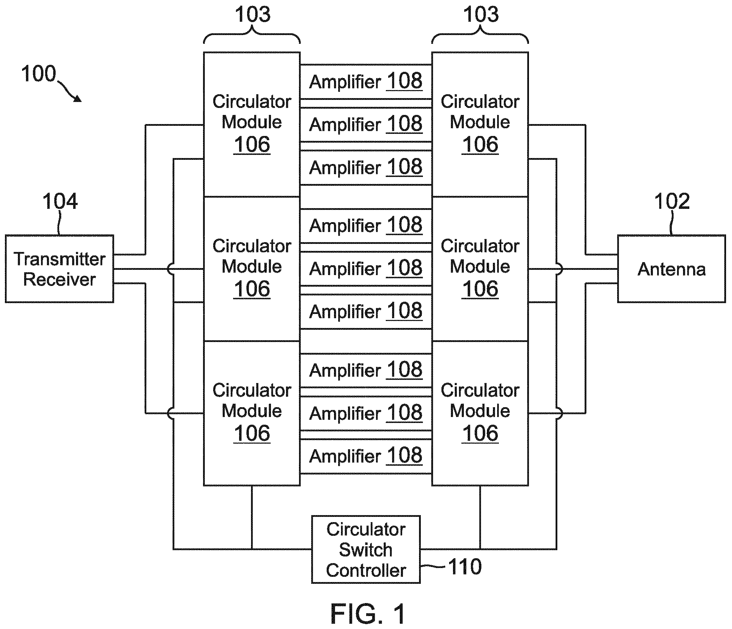

Figure 1 is a block diagram of a portion of a system 100 that implements redundancy networks that are fabricated from circulator modules. In one implementation as shown, system 100 is part of a communication node that transmits and receives signals. For example, the system 100 receives a signal through an antenna 102. The signal is amplified by at least one amplifier 108 and then processed by a transmitter/receiver 104. In at least one implementation the amplifier 108 may be a low noise amplifier, a power amplifier, a travelling wave tube amplifier, or the like. Also, in certain implementations, the transmitter/receiver 104 provides a signal that is amplified by the amplifiers 108 and then provided to the antenna 102 for radiation to another communication node in the communication network. In certain embodiments, the system 100 is implemented on a platform that is inaccessible for repairs when a component on the system experiences a fault. For example, the system 100 may be implemented on a satellite located in space or other inaccessible location. In at least one embodiment, an amplifier 108 in the system 100 may experience a failure during the life of the system 100. To prevent the failure from negatively affecting the operation of the system 100, when the system 100 begins operation, the system 100 may include multiple amplifiers 108, where a portion of the amplifiers 108 function as standby amplifiers in the event that an operating amplifier fails. When an operating amplifier fails, a switching network 103 changes a communication path that passes through the failed LNA to pass through a standby LNA. As shown in Figure 1, the amplifiers 108 are used as examples of electronic components, where the input/output ports of the components may connect to other components through transmission media that includes waveguides, microstrip, coaxial, and the like. In at least one implementation, the components may connect to other components via adapters that allow the component to interface with other components fabricated in a different transmission media. It is intended that the switching network 103, as described herein, can be used to change electrical paths through an operating component to a standby component.

In certain implementations, the switching network 103 is comprised of circulator modules 106. A circulator module 106 is a modular network of circulators that can be interconnected with one another to create the larger switching network 103. In at least one embodiment, a circulator module 106 contains multiple ferrite circulators that are connected to one another to provide switching capabilities between a number of module inputs and module outputs. In certain implementations, the ferrite circulators in a circulator module 106 may be waveguide circulators, where each circulator has three arms arranged at 120° that meet in a common junction. The common junction may be loaded with a non-reciprocal material such as ferrite. When a magnetizing field is created in the ferrite element that is located at the common junction, a gyromagnetic effect can be used to switch the microwave signal from one waveguide arm to another. By reversing the direction of the magnetizing field, the direction of switching between the waveguide arms is reversed. Thus, a switching circulator is functionally equivalent to a fixed-bias circulator but has a selectable direction of circulation. RF energy can be routed with low insertion loss from one waveguide arm to either of the two outputs arms. If one of the waveguide arms is terminated in a matched load, then the circulator acts as an isolator, with high loss in one direction of propagation and low loss in the other direction. Reversing the direction of the magnetizing field will reverse the direction of high and low isolation.

In certain embodiments, to control the direction of magnetization for the ferrite circulators in the different circulator modules 106, the system 100 includes a circulator switch controller 110. The circulator switch controller 110 sends electrical signals to the individual circulators that control the direction of circulation for each circulator. For example, the circulator switch controller 110 sends a high current pulse to a particular circulator that changes the direction of circulation in that circulator. In certain implementations, the circulator switch controller 110 includes a separate driver that is associated with each circulator in the system 100, where the driver provides a switching signal to an individual circulator. In at least one other implementation, where switching time is not critical, the circulator switch controller 110 may include a single driver that is multiplexed to the separate circulators in the circulator module 106. In a further embodiment, the circulator switch controller includes an interface that allows a user to control the switching directly through another device.

The circulator modules 106 include multiple ferrite elements that typically have impedance-matching transitions between each ferrite element. For example, a conventional waveguide circulator may transition from one ferrite element to a dielectric-filled waveguide such as a quarter-wave dielectric transformer structure, to an air-filled waveguide, and then back to another dielectric-filled waveguide section and the next ferrite element. The dielectric transformers are typically used to match the lower impedance of the ferrite element to that of an air-filled waveguide.

As stated above, a circulator module 106 may contain multiple waveguide circulators. Further, the circulator module 106 may also include multiple load elements for isolation of certain ports in some of the ferrite circulators, where the multiple load elements are designed to match the impedance of an air-filled waveguide interface. The circulators and load elements can be connected in various configurations according to the modular design of the circulator module 106. In certain implementations, the number of desired standby components in the system determines the type of modular design that is used to design a particular circulator module. For example, a system 100, having N amplifiers 108 where M amplifiers 108 are operational at any given time, provides switching so that N-M standby amplifiers 108 can be switched into the communication paths in system 100 such that there are always M communication paths available between the transmitter/receiver 104 and the antenna 102. As N-M increases, the size of the corresponding circulator module 106 also gradually increases.

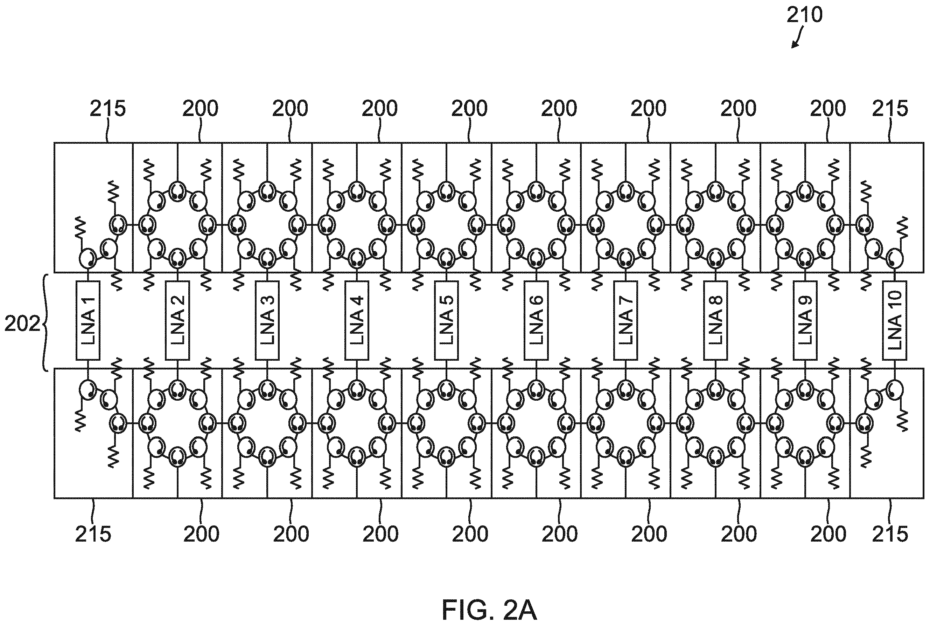

Figure 2A illustrates an exemplary embodiment of a redundancy network 210 fabricated from multiple circulator modules 200 that are similar to circulator modules 106. As illustrated the redundancy network 210 includes eight inputs, eight outputs, and ten components. The redundancy network is able to provide eight separate communication paths through the redundancy network at a time. In certain implementations, the eight inputs are each connected to a separate component, where eight of the ten components are operational. When the redundancy network initially begins operating, the two components that are not operational are standby components. When one of the eight operational components experiences a failure, the redundancy network 210 switches the communication paths from the failed component to one of the standby components.

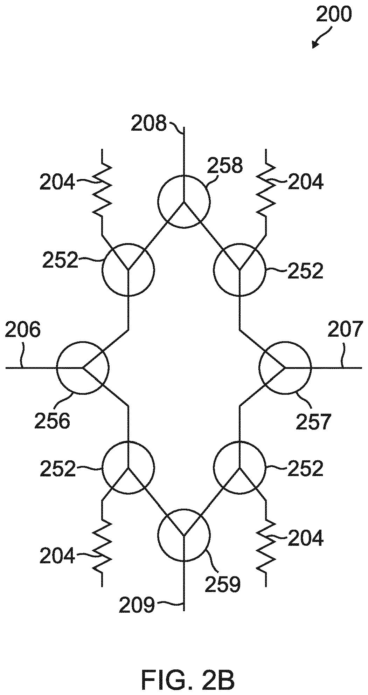

In certain implementations, when the redundancy network 210 has N-M=2 redundancy, as can be seen in the redundancy network 210, the redundancy network 210 may include modified circulator modules 215. A modified circulator module 215 is formed by removing an input/output from a circulator module 200 and removing circuitry that becomes superfluous with the removal of an input/output. As shown in Figure 2, modified circulator module 215 is an exemplary implementation of a modified circulator module. Other configurations may be used, where some of the configurations include superfluous circulators and other components. Any open waveguide sections that are formed by the removal of circuitry may be terminated with a matched load. As shown, in the redundancy network 210, a signal that is received from a component 202 by the modified circulator module 215 is circulated into the neighboring circulator module 200. Conversely, any signal that is circulated into the modified circulator module 215 from a neighboring circulator module 200 is circulated into a component 202.

Figure 2B illustrates a circulator module 200. As illustrated, the circulator module 200 includes multiple circulators 252, 256, 257, 258, and 259 and multiple matched loads 204 that terminate waveguide sections. Further, each circulator module 200 includes interconnection ports 206 and 207. The interconnection ports 206 and 207 may include short pieces of waveguide that allow signals to pass from one circulator module 200 to neighboring circulator modules that may or may not be similar to circulator module 200. Further, the circulator module includes interconnects 208 and 209 for connecting to other components.

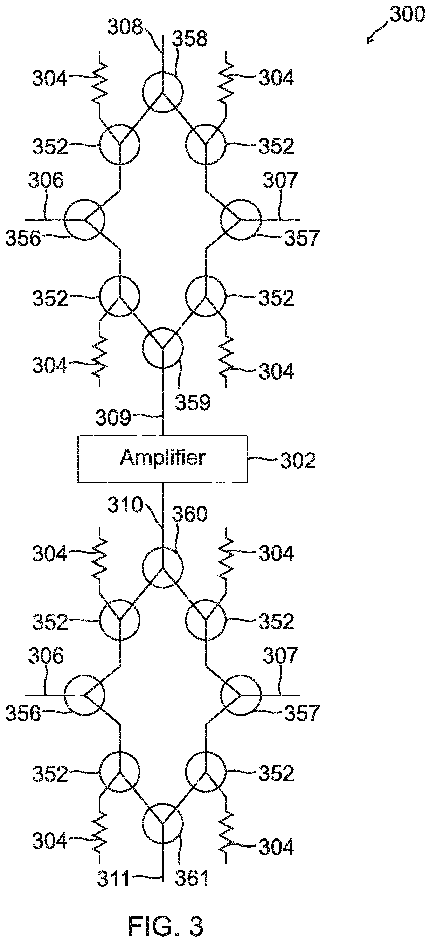

Figure 3 illustrates a path module 300, where the path module 300 includes the two different circulator modules as described in Figure 2B that are respectively connected to two different ports of single amplifier 302 or component. In certain implementations, circulators in a circulator module connected to one side of the amplifier 302 may correspond to circulators in another circulator module connected to the same amplifier. In certain implementations, a circulator switch controller such as circulator switch controller 110 in Figure 1 sends the same control signal to corresponding circulators. For example, circulators 352 may be controlled by the same control signal, such that all of the circulators 352 either circulate signals clockwise or circulate signals counterclockwise. Similarly, circulators 356 correspond with each other and circulators 357 correspond with each other. Also, in certain implementations, circulator 358 corresponds with circulator 361 and circulator 359 corresponds with circulator 360. By having different circulators controlled by the same control signal, the amount of circuitry used to support the operation of a redundancy network is reduced. Similarly, the input/outputs 306, 307. 308, 309, 310, and 311 function similarly to the input/outputs described above with relation to Figure 2B.

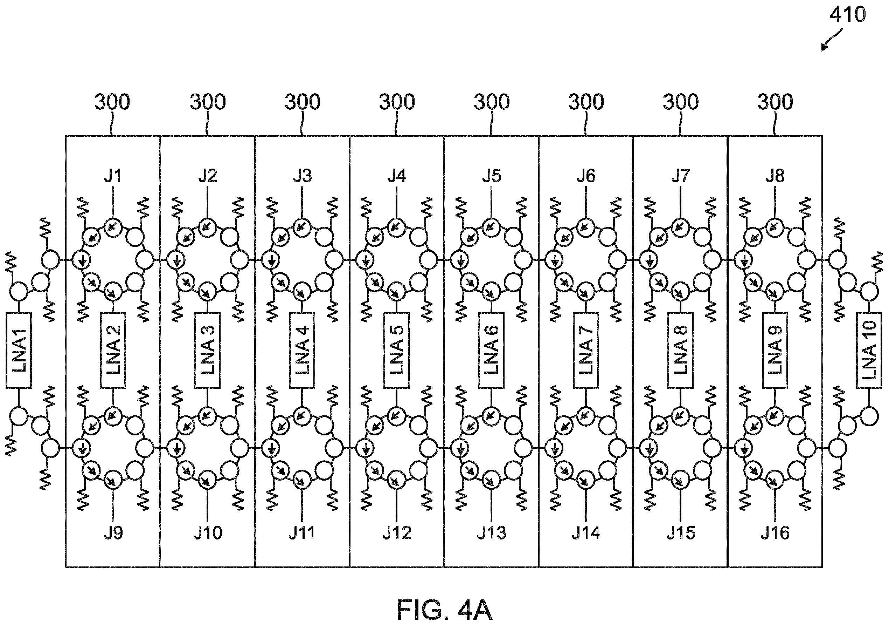

Figures 4A-4G illustrate the configuration of communication paths through a redundancy network 410, where redundancy network 400 is similar to redundancy network 210. As illustrated, the redundancy network 410 has ten LNAs that are numbered LNA 1 - LNA 10. As illustrated, the LNAs represent a redundant set of components. In certain alternative implementations, the redundant set of components may include other operational components other than LNAs. As illustrated, the redundancy network 410 includes eight communicative paths through the redundancy network 410. Each of the communicative paths have a pair of input/outputs. In certain implementations, communications through the redundancy network 410 are unidirectional. However, in other implementations, communications through the redundancy network 410 are bidirectional. When communications through the redundancy network 410 are bidirectional, the inputs may function as outputs and outputs may function as inputs depending on the direction of the communications through the redundancy network 410. As there are eight communicative paths through the illustrated redundancy network 410, there are two different sets of input/outputs. A first set of input/outputs is represented by input/outputs J1-J8 and a second set of input/outputs is represented by input/outputs J9-J16. Further, the input/outputs J1-J8 respectively correspond with input/outputs J9-J16 such that a pair of input/outputs correspond with each communicative path, where one input/output in the pair of input/outputs is from the first set of input/outputs and a second input/output in the pair of input/outputs is from the second set of input/outputs.

Figure 4A illustrates an initial configuration for a redundancy network 410. As illustrated, the redundancy network 410 has eight communicative paths and ten operational LNAs. Thus, there are two standby LNAs, which are designated by LNA 1 and LNA 10. Accordingly, the LNA 2-LNA 9 may be designated as the initially operational components. As stated above, each input/output is part of a pair of input/outputs that corresponds with an operational component. As illustrated in the initial configuration, input/outputs J1 and J9 are the input/outputs for a first communication path through a first operational component LNA 2. The input/outputs J2 and J10 are the input/outputs for a second communication path through a second operational component LNA 3. The input/outputs J3 and J11 are the input/outputs for a third communication path through a third operational component LNA 4. The input/outputs J4 and J12 are the input/outputs for a fourth communication path through a fourth operational component LNA 5. The input/outputs J5 and J13 are the input/outputs for a fifth communication path through a fifth operational component LNA 6. The input/outputs J6 and J14 are the input/outputs for a sixth communication path through a sixth operational component LNA 7. The input/outputs J7 and J15 are the input/outputs for a seventh communication path through a seventh operational component LNA 8. The input/outputs J8 and J16 are the input/outputs for an eighth communication path through an eighth operational component LNA 9.

In certain implementations, and as illustrated, each communication path through a path module as illustrated in Figure 3. During the initial configuration of the redundancy network 410, the circulators in the path modules are configured to circulate the signals such that they propagate through the amplifier 302 and to a corresponding output. For example, looking at path module 300, circulators 358, 359, 360, and 361 are configured to circulate a signal counterclockwise and circulators 352, 356, and 357 may be configured to circulate signals clockwise as understood by one having skill in the art. Please note, that clockwise and counterclockwise are used primarily as relational terms to indicate how circulators are configured in relation to one another. When the path module 300 is configured as described, a signal input at port 308 will be circulated such that the signal will propagate through the amplifier 302 and out of the path module 300 at port 311. Conversely, a signal input at port 311 will be circulated such that the signal will propagate through the amplifier 302 and out of the path module at port 308.

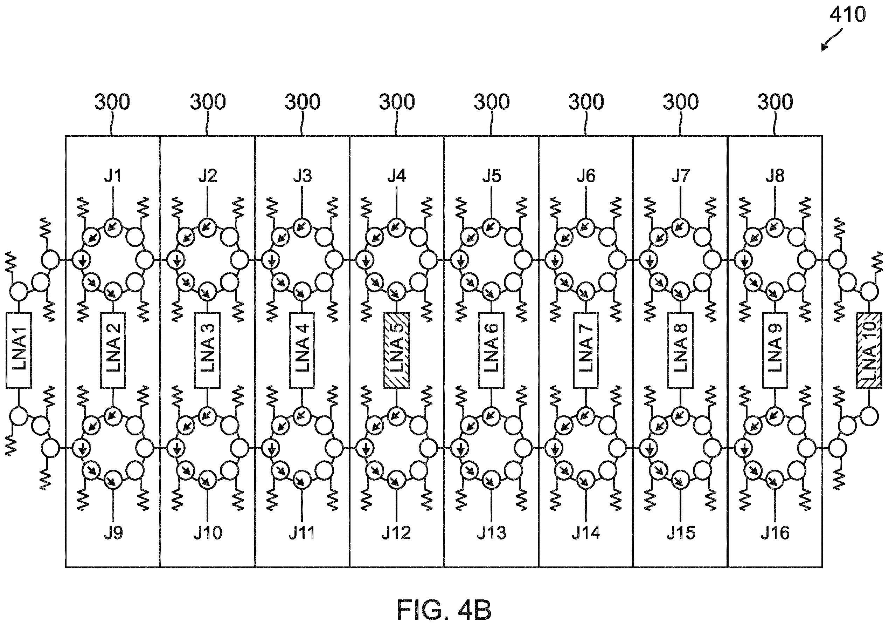

Figure 4B illustrates a redundancy network 410, when an LNA experiences a failure. For example, as illustrated in Figure 4B, LNA 5 experiences a failure. When an operational component fails, the communication paths are reconfigured such that the communication paths switch to include a standby component. For example, LNA 10 or LNA 1 may be identified as standby components that may become part of reconfigured communication paths through the redundancy network 410. However, switching the circulators of the communication paths to incorporate the LNA 10 disrupts the communication paths that run through operational components that have yet to experience a failure. For example, when the communication paths are reconfigured to include LNA 10, the communication paths from J5 to J13 through LNA 6, from J6 to J14 through LNA 7, from J7 to J15 through LNA 8, and J8 to J16 through LNA 9 will experience disruptions. To limit the duration of the disruptions, the circulators in the different path modules 300 may be reconfigured in such a way that each communication path experiences a disruption equal to the time used for the switching of a single circulator.

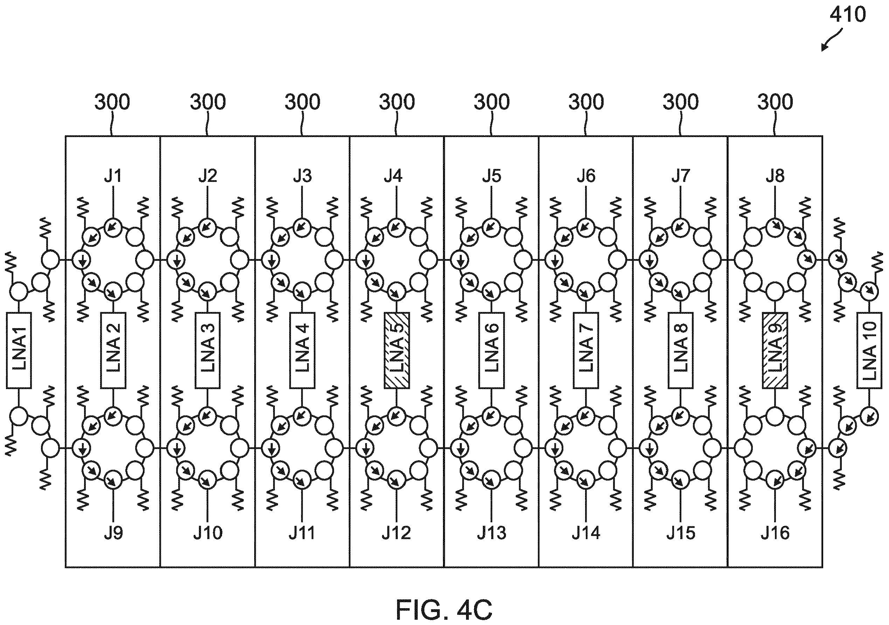

Figure 4C illustrates the redundancy network 410 after a communication path from J8 to J16 through LNA 9 has been switched such that the communication path from J8 to J16 is through LNA 10. To reconfigure the path, the circulators that are part of modified circulator modules as described above in relation to modified circulator modules 215 in Figure 2A may be reconfigured or may be already configured to circulate signals such that a signal received from a neighboring circulator module 300 is routed through the LNA 10 and back into the neighboring circulator module 300. When the modified circulator modules are appropriately configured, the circulators that are not part of a communication path are configured such that only a single pair of corresponding circulators in the path module 300 are switched to reconfigure the communication path from J8 to J16 through LNA 9 such that the LNA 9 switches to LNA 10. In particular, the circulators are reconfigured, such that when circulator 358 and 361 are switched from counterclockwise to clockwise, the communication path switches from LNA 9 to LNA 10. Thus, the communication path from J8 to J16 is disrupted for the duration of time equal to the time needed to switch the circulators 358 and 361, which circulators may be switched with the same control signal.

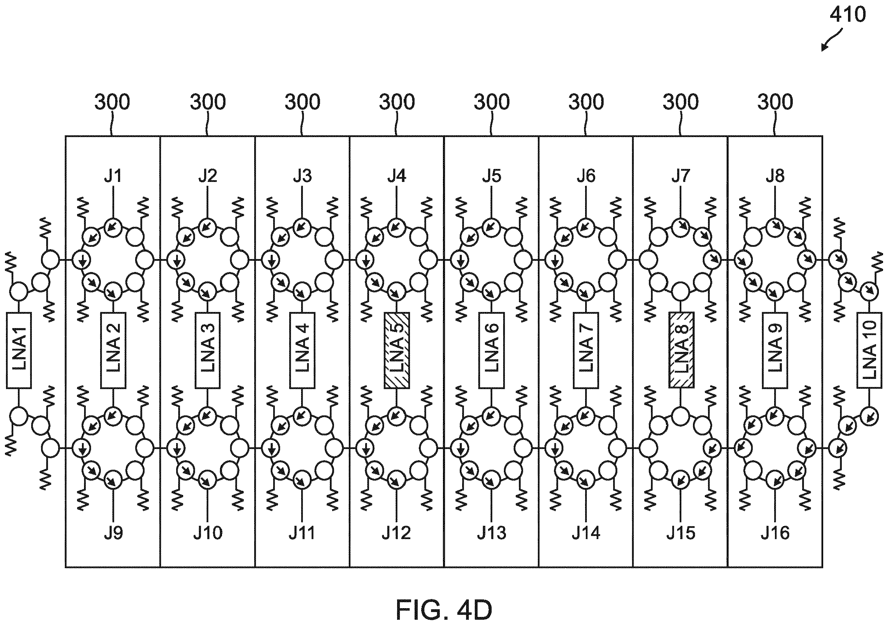

Figure 4D illustrates the redundancy network 410 after a communication path from J7 to J15 through LNA 8 has been switched such that the communication path from J7 to J15 is through LNA 9. To reconfigure the path, the path modules 300 that include LNA 8 and LNA 9 include circulators that are not currently in an operational communication path. The circulators that are not in an operational communication path are reconfigured to reconfigure the communication path from J7 to J15 through LNA 9. When the nonoperational circulators are appropriately configured in the path module 300 that includes LNA 8, the circulators 358 and 361 are switched from counterclockwise to clockwise. When the circulators 358 and 361 are switched, the communication path switches from LNA 8 to LNA 9. Thus, the communication path from J7 to J15 is disrupted for the duration of time equal to the time needed to switch the circulators 358 and 361, which circulators may be switched with the same control signal.

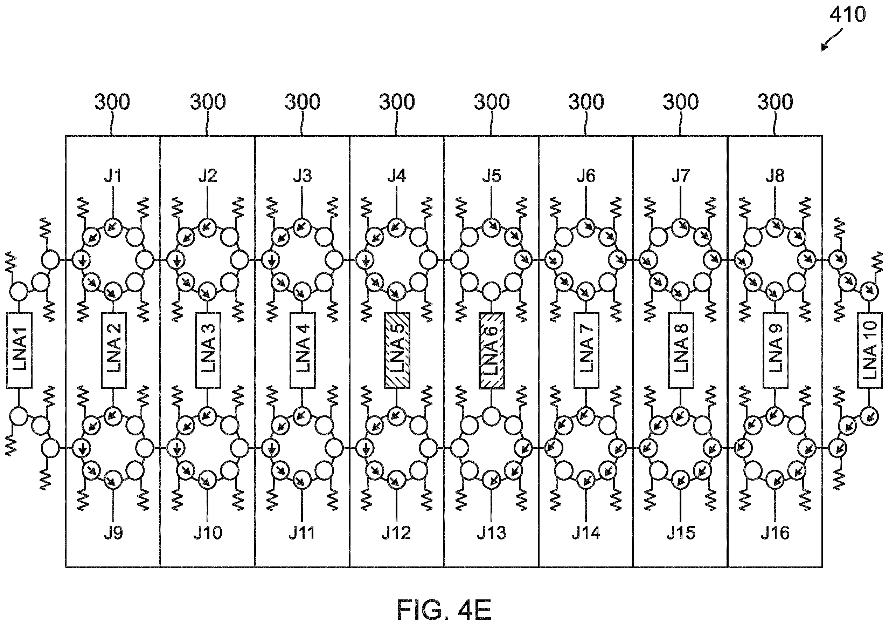

Figure 4E illustrates the redundancy network 410 after a communication path from J6 to J14 through LNA 7 has been switched such that the communication path from J6 to J14 is through LNA 8. Further, the communication path from J5 to J13 through LNA 6 has also been switched such that the communication path from J5 to J13 is through LNA 7. These communication paths were changed similar to the switching of the communication paths described above with respect to Figures 4C and 4D. Thus, the communication paths that have been switched have each been interrupted for a period of time equal to the time needed to switch a single circulator.

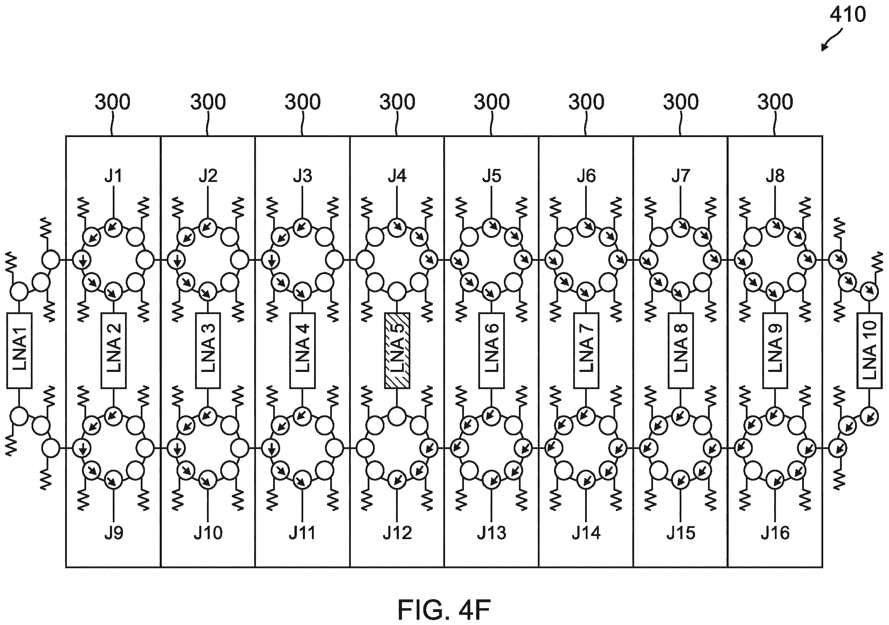

Figure 4F illustrates the redundancy network 410 after a communication path from J4 to J12 through LNA 5 has been switched such that the communication path from J4 to J12 is through LNA 6. The path through LNA 5 has already been disrupted due to the failure of LNA 5, however this communication path may be reconfigured as described above such that it is only interrupted for the time needed to reconfigure a single circulator. When the communication path from J4 to J12 has been reconfigured, the eight communication paths become reconfigured such that the communication paths pass through operational components.

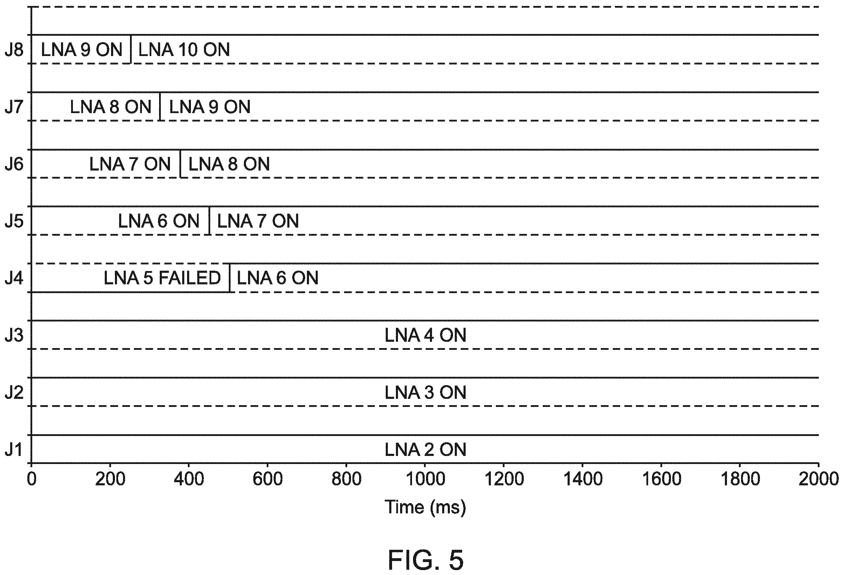

Figure 5 illustrates a timing chart illustrating the disruption of the signals provided through the different inputs of the redundancy network 410. As illustrated, at time 0, J4 is low, while inputs J1-J3 and J5-J8 are high. The low signal indicates that a component in the path through J4 has failed, which component is LNA 5 as described above. As the component has failed, the circulator switch controller for the redundancy network 410 begins changing the circulators so that J4 connects to an operational LNA. For example, the communication path from J8 switches from LNA 9 to LNA 10, the communication path from J7 switches from LNA 8 to LNA 9, the communication path from J6 switches from LNA 7 to LNA 8, the communication path from J5 switches from LNA 6 to LNA 7, and the communication path from J4 switches from the failed LNA 5 to LNA 6. As illustrated, at the moment when a path switches from one LNA to another LNA, the communication path experiences a momentary disruption. However, when the circulators are reconfigured as described above, the momentary disruption is equal to the time needed to switch a single circulator, thus reducing the impact on the operational paths.

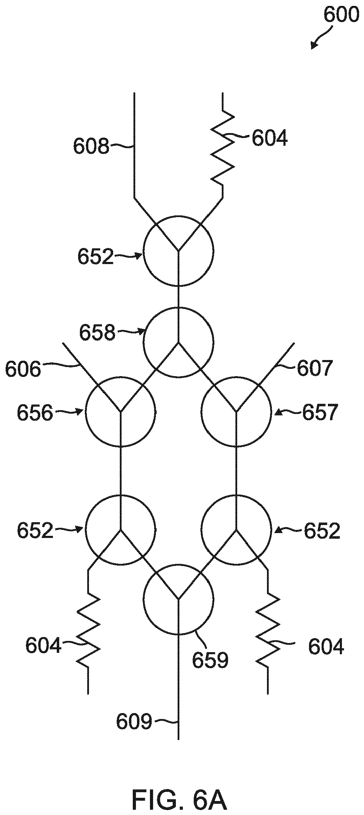

Figure 6A illustrates another exemplary implementation of a circulator module 600. As illustrated, the circulator module 600 includes multiple circulators 652, 656, 657, 658, and 659 and multiple matched loads 604 that terminate waveguide sections. Further, each circulator module 600 includes interconnection ports 606 and 607. The interconnection ports 606 and 607 may include short pieces of waveguide that allow signals to pass from one circulator module 600 to neighboring circulator modules that may or may not be similar to circulator module 600. Further, the circulator module includes interconnects 608 and 609 for connecting to other components.

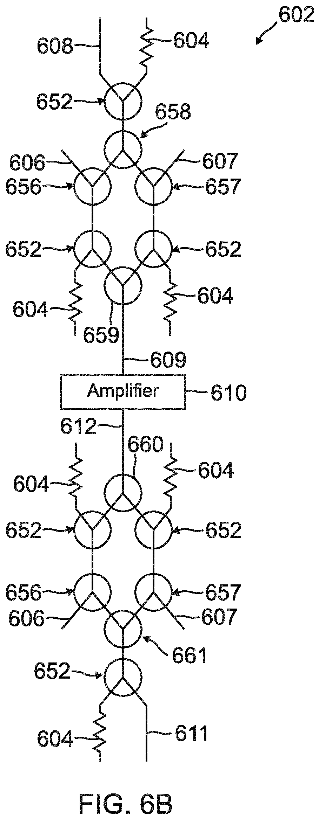

Figure 6B illustrates a path module 602, where the path module 602 includes two different circulator modules 600 as described in Figure 6A that are respectively connected to two different ports of single amplifier 610 or other component. In certain implementations, circulators in a circulator module connected to one port of the amplifier 610 may correspond to circulators in another circulator module connected to a different port of the same amplifier 610. In certain implementations, a circulator switch controller such as circulator switch controller 110 in Figure 1 may send the same control signal to corresponding circulators. For example, circulators 656 throughout the path module 600 correspond with each other and circulators 657 correspond with each other. Also, in certain implementations, circulator 658 corresponds with circulator 661 and circulator 659 corresponds with circulator 660. By having different circulators controlled by the same control signal, the amount of circuitry used to support the operation of a redundancy network is reduced. Similarly, the input/outputs 606, 607, 608, 609, 612, and 611 function similarly to the input/outputs described above with relation to Figure 6A.

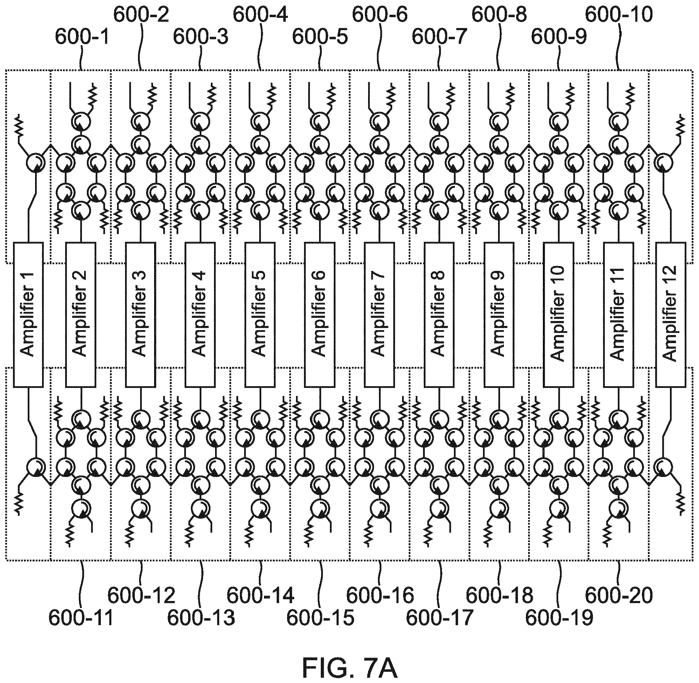

Figures 7A-7D illustrate the reconfiguring of circulators in a redundancy network 700 when the redundancy network 700 experiences failures in two components. As illustrated in Figure 7A, the redundancy network 700 includes multiple path modules that function as described above in relation to Figures 6A and 6B. As described above, the path modules are comprised of circulator modules 600 and in certain implementations, the path modules may be comprised of modified circulator modules, which function in a similar manner to the modified circulator modules 215 described above in regards to Figure 2A in so far that, extraneous circulators and interconnections are removed. As illustrated in Figure 7A, the circulator modules are referred to as circulator modules 600-1 - 600-20. Initially, each of the circulator modules 600-1 - 600-20 is connected to one of amplifier 2 through amplifier 11, where circulator modules 600-1 - 600-10 provide inputs to respective amplifiers 2 through amplifier 11 and circulator modules 600-11 - 600-20 provide outputs from respective amplifiers 2 through amplifier 11. As the circulator modules 600-1 - 600-20 do not initially function as inputs or outputs for amplifier 1 and amplifier 12, amplifier 1 and amplifier 12 function as standby amplifiers.

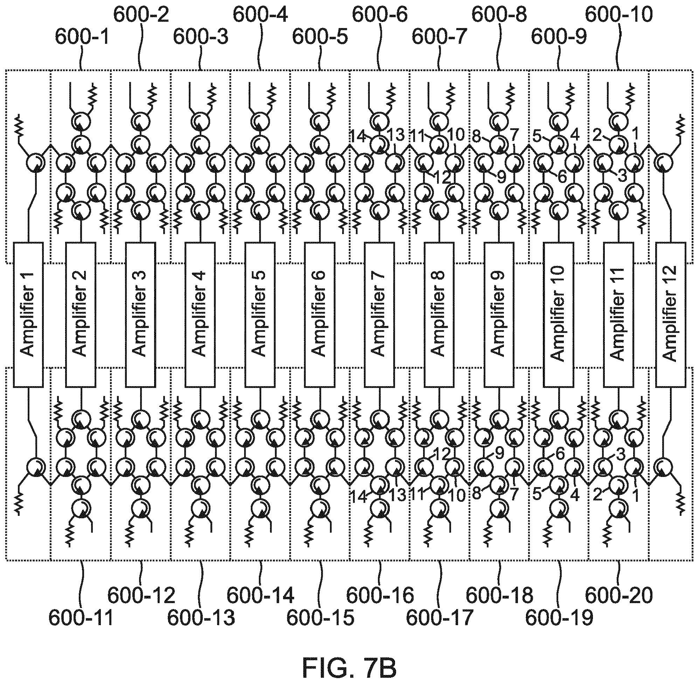

Figure 7B illustrates the reconfiguration of the redundancy network 700 when amplifier 7 fails. For example, when amplifier 7 fails, the communication paths from the inputs for circulator modules 600-6 - 600-10 are reconfigured such that they respectively pass through amplifier 8 through amplifier 12 and then respectively continue through the outputs of circulator modules 600-16 - 600-20. To reconfigure the circulator modules, the configuration modules are switched according to the order indicated through circulators 1 - 14. As shown, each number in the input circulator modules 600-6 - 600-10 has a corresponding circulator 1 - 14 in the output circulator modules 600-16 - 600-20. Circulators have the same numbers to indicate that they are switched at the same time, or switched with the same control signal sent from a circulator switch controller. When the circulators are switched according to the order shown, the operational communication paths may be disrupted for the time used to switch a single circulator.

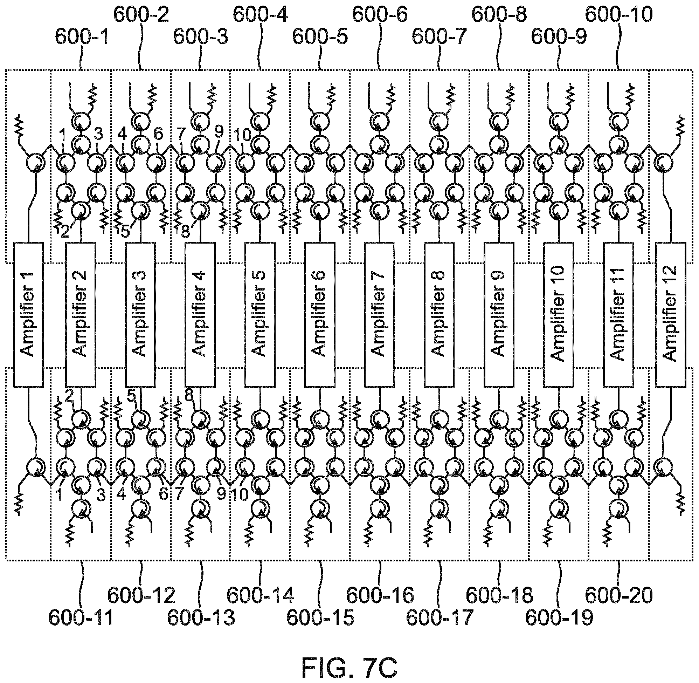

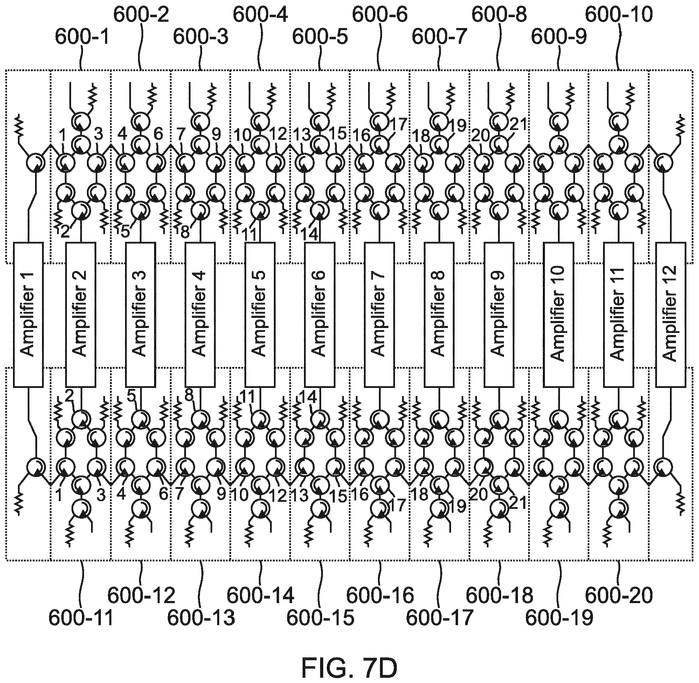

Figures 7C and 7D illustrate circulator reconfigurations when the redundancy network experiences a second failed amplifier. Specifically, Figure 7C illustrates a reconfiguration when amplifier 5 fails and Figure 7D illustrates a reconfiguration when amplifier 10 fails. Both amplifier failures taking place after the failure of amplifier 7 and subsequent reconfiguration as described above in connection with Figure 7B. As stated, Figure 7C illustrates the reconfiguration of the redundancy network 700 when amplifier 5 fails after the failure of amplifier 7. For example, when amplifier 5 fails, the communication paths from the inputs for circulator modules 600-1 - 600-4 are reconfigured such that they respectively pass through amplifier 1 through amplifier 4 and then respectively continue through the outputs of circulator modules 600-11 - 600-14. To reconfigure the circulator modules, the configuration modules are switched according to the order indicated through circulators 1 - 10. As shown, each number in the input circulator modules 600-6 - 600-10 has a corresponding circulator 1 - 10 in the output circulator modules 600-16 - 600-20. Circulators have the same numbers to indicate that they are switched at the same time, or switched with the same control signal sent from a circulator switch controller. In this implementation, the failure of the second amplifier was between the first failed component (amplifier 7) and the remaining standby component (amplifier 1). As such, when the circulators are switched according to the order shown, the operational communication paths may be disrupted for the time used to switch a single circulator.

As stated, Figure 7D illustrates the reconfiguration of the redundancy network 700 when amplifier 10 fails after the failure of amplifier 7. For example, when amplifier 10 fails, the communication paths from the inputs for circulator modules 600-1 - 600-6 are reconfigured such that they respectively pass through amplifier 1 through amplifier 6 and then respectively continue through the outputs of circulator modules 600-11 - 600-16. Also, the communication paths from the inputs for circulator modules 600-7 - 600-8 are reconfigured such that they respectively pass through amplifier 8 and amplifier 9 and then respectively continue through the outputs of circulator modules 600-17 - 600-18. To reconfigure the circulator modules, the circulators in the circulator modules are switched according to the order indicated through circulators 1 - 21. As shown, each number in the input circulator modules 600-1 - 600-8 has a corresponding circulator 1 - 21 in the output circulator modules 600-11 - 600-18. Circulators have the same numbers to indicate that they are switched at the same time, or switched with the same control signal sent from a circulator switch controller. In this implementation, the first failed component (amplifier 7) was between the second failed component (amplifier 10) and the remaining standby component (amplifier 1). As such, when the circulators are switched according to the order shown, the operational communication paths may be disrupted for the time used to switch a single circulator.

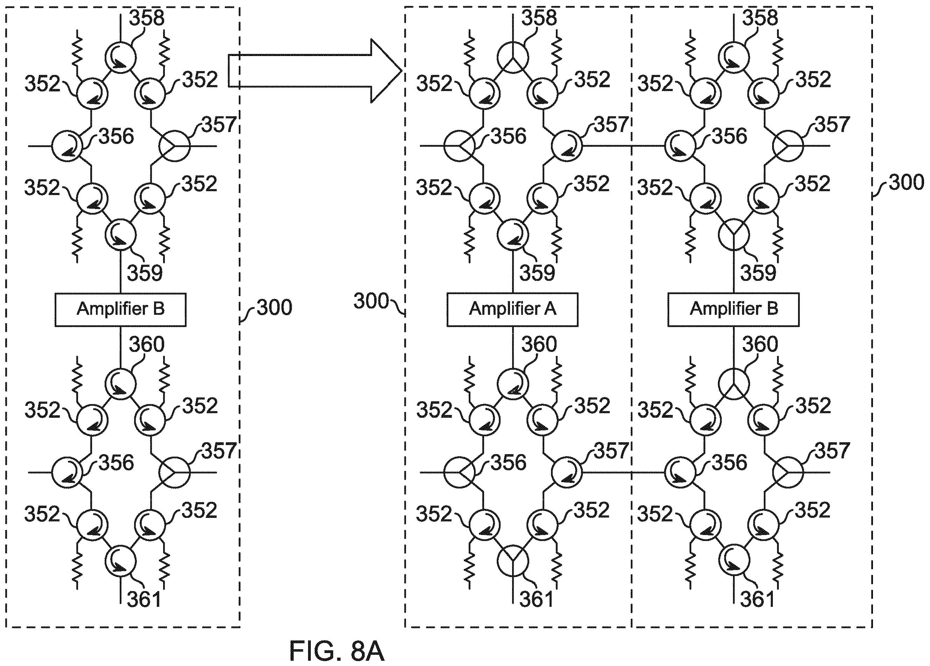

Figures 8A-8J illustrate various circulator reconfigurations for path modules when an amplifier fails for a system implementing the path module 300 described above in Figure 3. Figure 8A illustrates the reconfiguration of a signal path to the left from a path module 300 that passed the signal straight through the path module 300, where the signal was passed straight through on the left edge of the path module 300. To reroute the signals in the redundancy network, the circulator switch controller starts at the leftmost path module 300 associated with a standby component and in the leftmost path module 300, the circulator switch controller sets circulators 359 and 360 to clockwise and circulator pair 357 to clockwise. In the next path module 300 to the right, the circulator switch controller first sets circulator pair 356 to counterclockwise, then sets circulators 358 and 361 to clockwise, then sets circulators 359 and 360 to clockwise, and then sets circulator pair 357 to clockwise. The circulator switch controller then reconfigures the next path module 300 to the right, where the circulator switch controller first sets circulator pair 356 to counterclockwise, then sets circulators 358 and 361 to clockwise, then sets circulators 359 and 360 to clockwise, and then sets circulator pair 357 to clockwise. The circulator switch controller progressively reconfigures path modules 300 from left to right through the redundancy network until the failed amplifier is switched out. Then in the final path module 300 to be reconfigured, the switch controller sets the circulator pair 356 to counterclockwise and then sets the circulators 358 and 361 to clockwise. The same reconfiguration may be made when the signal passes through on the right edge of the path module 300.

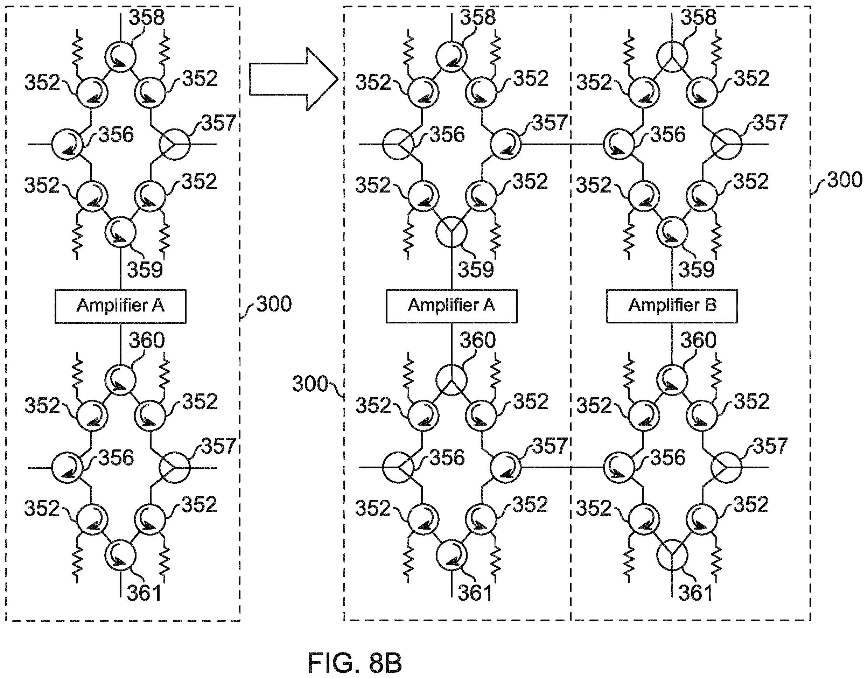

Figure 8B illustrates the reconfiguration of a signal path to the right from a path module 300 that passed the signal straight through the path module 300, where the signal was passed straight through on the left edge of the path module 300. To reroute the signals in the redundancy network, the circulator switch controller starts at the rightmost path module 300 associated with a standby component and in the rightmost path module 300, the circulator switch controller sets circulators 359 and 360 to counterclockwise and circulator pair 356 to counterclockwise. In the next path module 300 to the left, the circulator switch controller first sets circulator pair 357 to clockwise, then sets circulators 358 and 361 to clockwise, then sets circulators 359 and 360 to counterclockwise, and then sets circulator pair 356 to counterclockwise. The circulator switch controller then reconfigures the next path module 300 to the left, where the circulator switch controller first sets circulator pair 357 to clockwise, then sets circulators 358 and 361 to clockwise, then sets circulators 359 and 360 to counterclockwise, and then sets circulator pair 356 to counterclockwise. The circulator switch controller progressively reconfigures path modules 300 from right to left through the redundancy network until the failed amplifier is switched out. Then in the final path module 300 to be reconfigured, the switch controller sets the circulator pair 357 to clockwise and then sets the circulators 358 and 361 to clockwise. The same reconfiguration may be made when the signal passes through on the right edge of the path module 300.

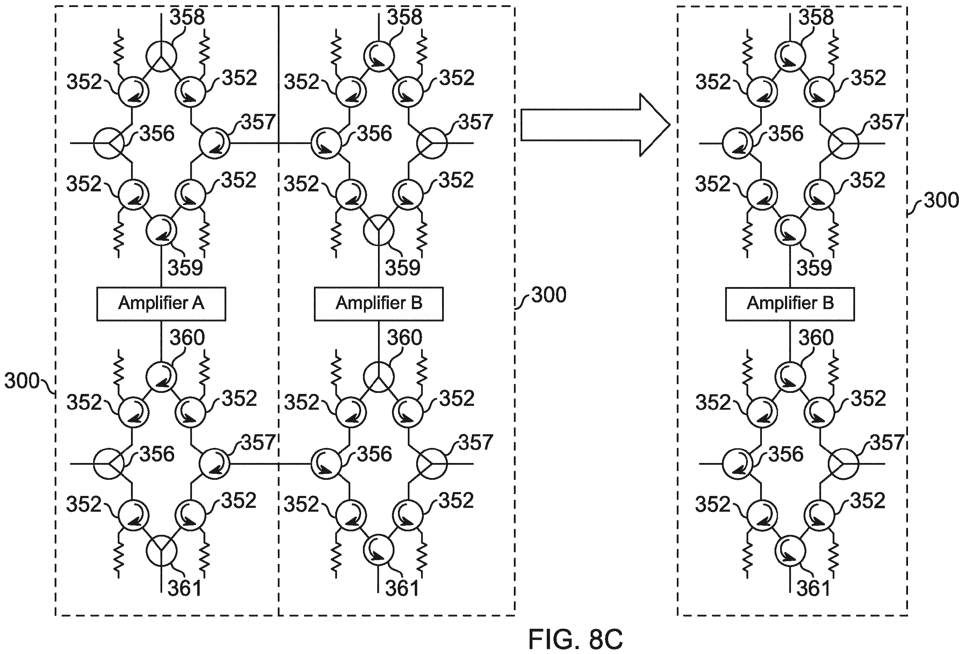

Figure 8C illustrates the reconfiguration of a signal path that moves towards the left through two modules 300 back into a single path module 300 where the signal passes through the left edge of the single path module 300. To reroute the signals in the redundancy network, the circulator switch controller starts at the rightmost path module 300 associated with a spare LNA and in the rightmost path module 300, the circulator switch controller sets circulators 359 and 360 to counterclockwise, then circulator pair 356 to clockwise, and then circulators 358 and 361 to counterclockwise. In the next path module 300 to the left, the circulator switch controller first sets circulators 359 and 360 to counterclockwise, then sets circulator pair 356 to clockwise, then sets circulators 358 and 361 to counterclockwise. The circulator switch controller then reconfigures the next path module 300 to the left, the circulator switch controller first sets circulators 359 and 360 to counterclockwise, then sets circulator pair 356 to clockwise, then sets circulators 358 and 361 to counterclockwise. The circulator switch controller progressively reconfigures path modules 300 from right to left through the redundancy network until the failed amplifier is switched out. Then in the final path module 300 to be reconfigured, the switch controller sets the circulators 359 and 360 to counterclockwise, then circulator pair 356 to clockwise, and then the circulators 358 and 361 to counterclockwise.

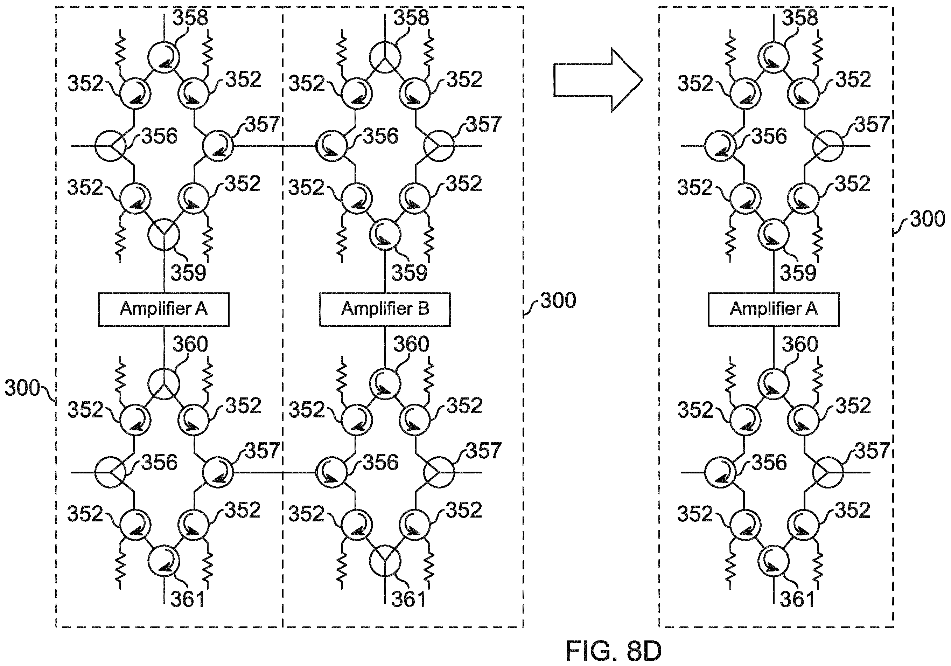

Figure 8D illustrates the reconfiguration of a signal path that moves towards the right through two modules 300 back into a single path module 300 where the signal passes through the left edge of the single path module 300. To reroute the signals in the redundancy network, the circulator switch controller starts at the leftmost path module 300 associated with a spare LNA and in the leftmost path module 300, the circulator switch controller sets circulators 359 and 360 to counterclockwise, then circulator pair 356 to clockwise, and then circulators 358 and 361 to counterclockwise. In the next path module 300 to the right, the circulator switch controller first sets circulators 359 and 360 to counterclockwise, then sets circulator pair 356 to clockwise, then sets circulators 358 and 361 to counterclockwise. The circulator switch controller then reconfigures the next path module 300 to the right, the circulator switch controller first sets circulators 359 and 360 to counterclockwise, then sets circulator pair 356 to clockwise, then sets circulators 358 and 361 to counterclockwise. The circulator switch controller progressively reconfigures path modules 300 from left to right through the redundancy network until the failed amplifier is switched out. Then in the final path module 300 to be reconfigured, the switch controller sets the circulators 359 and 360 to counterclockwise, then circulator pair 356 to clockwise, and then the circulators 358 and 361 to counterclockwise.

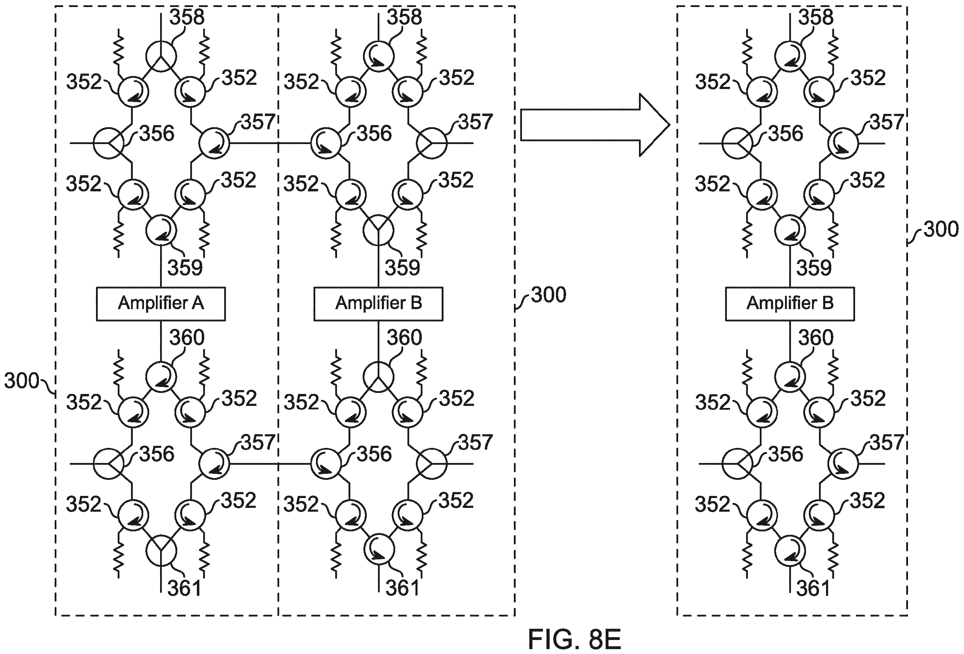

Figure 8E illustrates the reconfiguration of a signal path that moves towards the left through two modules 300 back into a single path module 300 where the signal passes through the right edge of the single path module 300. To reroute the signals in the redundancy network, the circulator switch controller starts at the rightmost path module 300 associated with a spare LNA and in the rightmost path module 300, the circulator switch controller sets circulators 359 and 360 to clockwise, then circulator pair 357 to counterclockwise, and then circulators 358 and 361 to clockwise. In the next path module 300 to the left, the circulator switch controller first sets circulators 359 and 360 to clockwise, then sets circulator pair 357 to counterclockwise, then sets circulators 358 and 361 to clockwise. The circulator switch controller then reconfigures the next path module 300 to the left, the circulator switch controller first sets circulators 359 and 360 to clockwise, then sets circulator pair 357 to counterclockwise, then sets circulators 358 and 361 to clockwise. The circulator switch controller progressively reconfigures path modules 300 from right to left through the redundancy network until the failed amplifier is switched out. Then in the final path module 300 to be reconfigured, the switch controller sets the circulators 359 and 360 to clockwise, then circulator pair 357 to counterclockwise, and then the circulators 358 and 361 to clockwise.

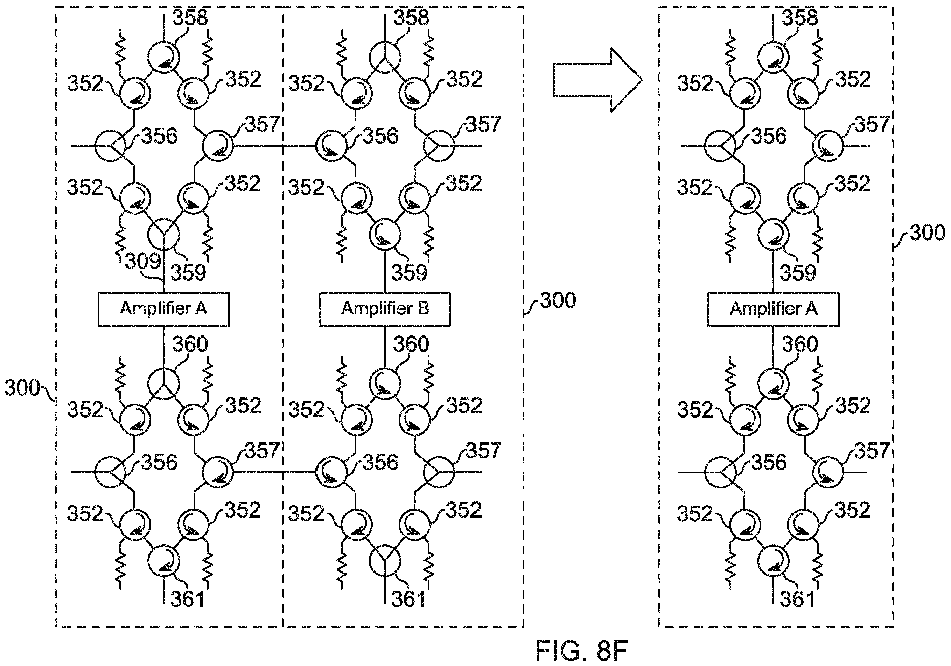

Figure 8F illustrates the reconfiguration of a signal path that moves towards the right through two modules 300 back into a single path module 300 where the signal passes through the right edge of the single path module 300. To reroute the signals in the redundancy network, the circulator switch controller starts at the lefttmost path module 300 associated with a spare LNA and in the rightmost path module 300, the circulator switch controller sets circulators 359 and 360 to clockwise, then circulator pair 357 to counterclockwise, and then circulators 358 and 361 to clockwise. In the next path module 300 to the right, the circulator switch controller first sets circulators 359 and 360 to clockwise, then sets circulator pair 357 to counterclockwise, then sets circulators 358 and 361 to clockwise. The circulator switch controller then reconfigures the next path module 300 to the right, the circulator switch controller first sets circulators 359 and 360 to clockwise, then sets circulator pair 357 to counterclockwise, then sets circulators 358 and 361 to clockwise. The circulator switch controller progressively reconfigures path modules 300 from left to right through the redundancy network until the failed amplifier is switched out. Then in the final path module 300 to be reconfigured, the switch controller sets the circulators 359 and 360 to clockwise, then circulator pair 357 to counterclockwise, and then the circulators 358 and 361 to clockwise.

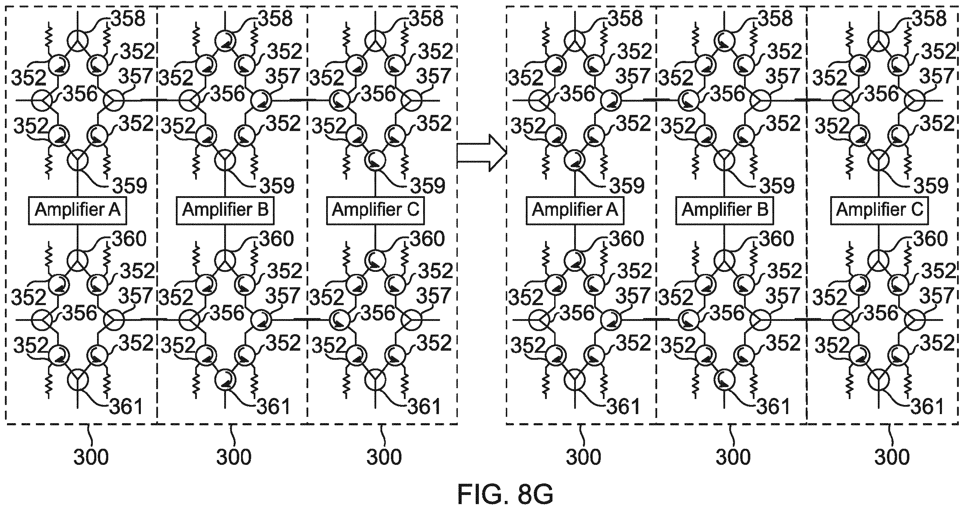

Figure 8G illustrates the reconfiguration of a signal path that moves towards the right through two modules 300 to where the signal path moves towards the left through two modules 300. To reroute the signals in the redundancy network, the circulator switch controller starts at the lefttmost path module 300 associated with a spare LNA and in the leftmost path module 300, the circulator switch controller sets circulators 359 and 360 to clockwise and then circulator pair 357 to clockwise. In the next path module 300 to the right, the circulator switch controller first sets the circulator pair 356 to counterclockwise, then sets circulators 358 and 361 to counterclockwise, then sets circulators 359 and 360 to clockwise, and then sets circulator pair 357 to clockwise. The circulator switch controller then reconfigures the next path module 300 to the right, where the circulator switch controller first sets the circulator pair 356 to counterclockwise, then sets circulators 358 and 361 to counterclockwise, then sets circulators 359 and 360 to clockwise, and then sets circulator pair 357 to clockwise. The circulator switch controller progressively reconfigures path modules 300 from left to right through the redundancy network until the failed amplifier is switched out. Then in the final path module 300 to be reconfigured, the switch controller sets circulator pair 356 to counterclockwise, and then the circulators 358 and 361 to counterclockwise.

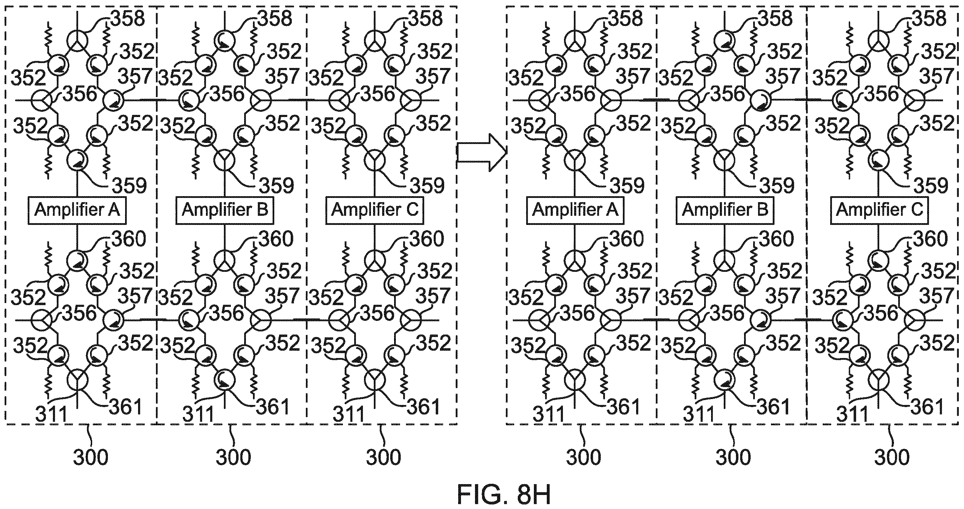

Figure 8H illustrates the reconfiguration of a signal path that moves towards the left through two modules 300 to where the signal path moves towards the right through two modules 300. To reroute the signals in the redundancy network, the circulator switch controller starts at the rightmost path module 300 associated with a spare LNA and in the rightmost path module 300, the circulator switch controller sets circulators 359 and 360 to counterclockwise and then circulator pair 356 to counterclockwise. In the next path module 300 to the left, the circulator switch controller first sets the circulator pair 357 to clockwise, then sets circulators 358 and 361 to clockwise, then sets circulators 359 and 360 to counterclockwise, and then sets circulator pair 356 to counterclockwise. The circulator switch controller then reconfigures the next path module 300 to the left, where the circulator switch controller first sets the circulator pair 357 to clockwise, then sets circulators 358 and 361 to clockwise, then sets circulators 359 and 360 to counterclockwise, and then sets circulator pair 356 to counterclockwise. The circulator switch controller progressively reconfigures path modules 300 from right to left through the redundancy network until the failed amplifier is switched out. Then in the final path module 300 to be reconfigured, the circulator switch controller sets circulator pair 357 to clockwise, and then the circulators 358 and 361 to clockwise.

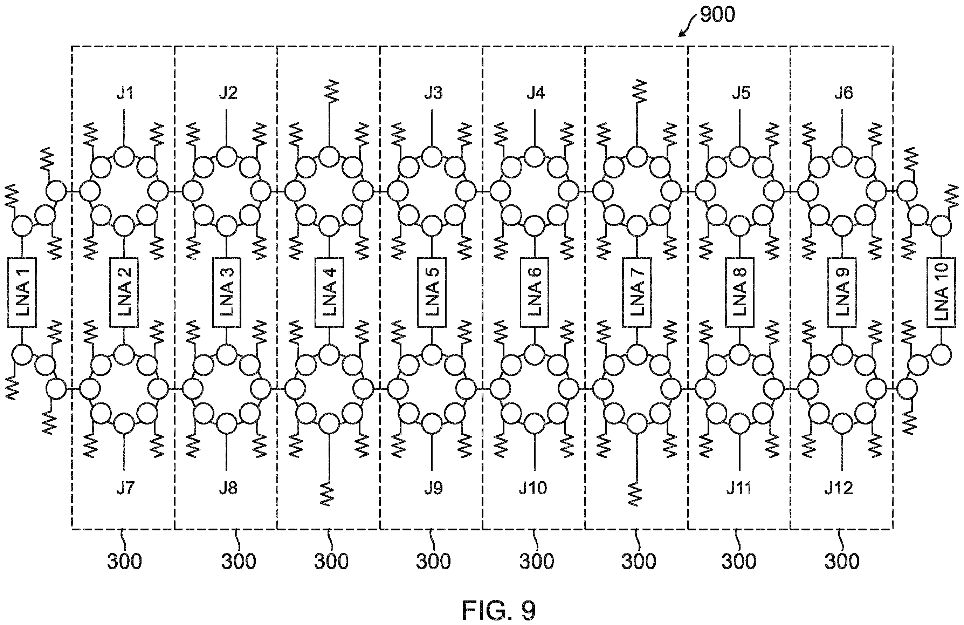

Figure 9 illustrates a redundancy network 900 that is able to switch a communicative path from a failed component to a standby component without interrupting other operational communicative paths through the redundancy network. In certain exemplary implementations, and as illustrated in Figure 9, a redundancy network 900 may be a 10 for 6 redundancy network comprised of 8 different circulator modules. Other configurations are contemplated as well, as the base concept presented described in relation to redundancy network 900 is applicable to other redundancy network configurations. As illustrated, the redundancy network 900 includes 10 LNAs, where there are 8 path modules 300, which is similar to the redundancy network 210 described above in Figure 2A, with the exception that each path module 300 that is able to communicate through inputs and outputs is next to a single path module 300 that has inputs and outputs terminated with a load. As illustrated in Figure 9, every third path module 300 has inputs and outputs terminated with a load. For example, the path modules associated with LNA 4 and LNA 7 have inputs and outputs terminated with loads, accordingly, both LNA 4 and LNA 7, along with LNA 1 and LNA 10 are initially standby components.

In certain implementations, when an LNA in a communication path experiences a failure, the redundancy network 900 is able to switch the communication path through the neighboring standby component without disrupting any of the other operational paths through redundancy network 900. For example, if LNA 3 fails, a circulator switch controller reconfigures the circulators in the path modules 300 that contain LNA 3 and LNA 4 such that the communication path from J2 to J8 passes through LNA 4 instead of through LNA 3. After the initial failure described above, other components may fail, while still allowing the reconfiguration of communication paths without disrupting other operative communication paths. For example, LNA 2 may fail and the communication path from J1 to J7 may be reconfigured to pass through LNA 1. Similarly, either LNA 6 or LNA 8 may fail and the respective communication paths from either J4 to J10 or J5 to J11 may be reconfigured to pass through LNA 7. Also LNA 9 may fail and the communication path from J6 to J12 may be reconfigured to pass through LNA 10. However, after the first component fails and its associated communication path has been reconfigured, the reconfiguration of the redundancy network 900 for subsequent failures may disrupt other communication paths. When the subsequent components fail, the paths may be reconfigured such that the communication paths are disrupted for the time used to switch a single circulator as described above with respect to Figures 4A-8H.

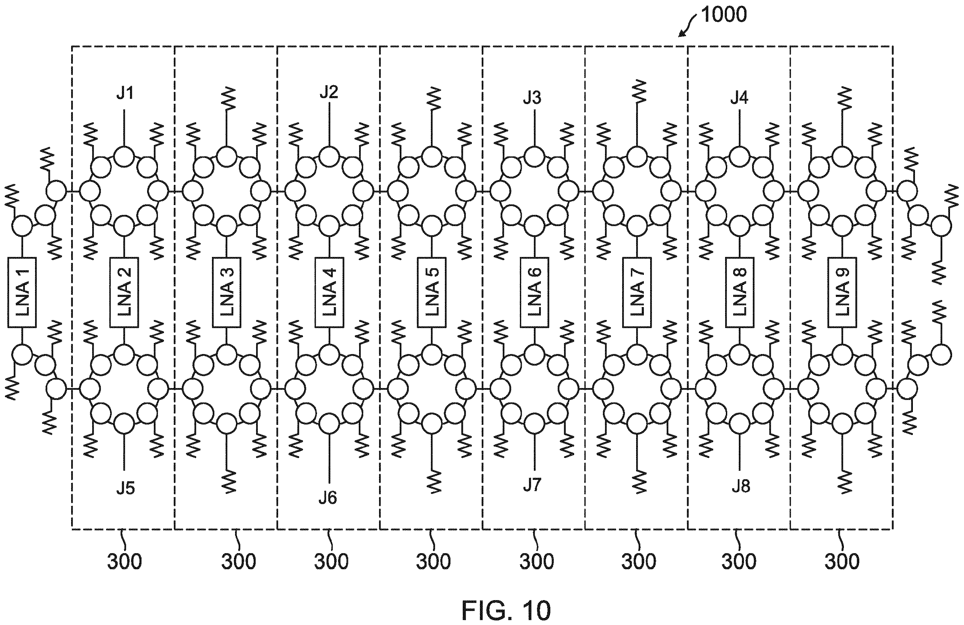

Figure 10 illustrates a 9 for 4 redundancy network 1000 that is able to switch a communicative path from a failed component to a standby component without interrupting other operational communicative paths through the redundancy network when it experiences up to two failed components. In certain exemplary implementations, and as illustrated in Figure 10, a redundancy network 1000 may be 9 for 4 redundancy network comprised of 8 different circulator modules. Other configurations are contemplated as well, as the base concept presented described in relation to redundancy network 1000 is applicable to other redundancy network configurations. As illustrated, the redundancy network 1000 includes 9 LNAs, where there are 8 path modules 300, which is similar to the redundancy network 210 described above in Figure 2A, with the exception that the inputs and outputs of the path modules 300 alternate between inputs connected to receive signals and inputs and outputs terminated in loads. As illustrated in Figure 10, every other path module 300 has inputs and outputs terminated with a load. For example, the path modules associated with LNA 3, LNA 5, LNA 7, and LNA 9 have inputs and outputs terminated with loads, accordingly, both LNA 3, LNA 5, LNA 7, and LNA 9, along with LNA 1 are initially standby components.

In certain implementations, when LNAs in communication paths experiences two failures, the redundancy network 1000 is able to switch the communication path through one of the neighboring standby components without disrupting any of the other operational paths through redundancy network 1000. For example, if LNA 2 fails, a circulator switch controller reconfigures the circulators in the path modules 300 that contain LNA 2 and LNA 1 such that the communication path from J1 to J5 passes through LNA 1 instead of through LNA 2. After the initial failure described above, other components may fail, while still allowing the reconfiguration of communication paths without disrupting other operative communication paths. For example, LNA 1 may fail and the communication path from J1 to J5 may be reconfigured to pass through LNA 3. Further, depending on the LNAs that fail, the redundancy network 1000 may be able to switch communication path for up to five LNAs without disrupting other operational paths through the redundancy network 1000. However, after two components fail and the associated communication paths have been reconfigured, subsequent failures may lead to reconfigurations of the redundancy network 1000 that can disrupt other communication paths.

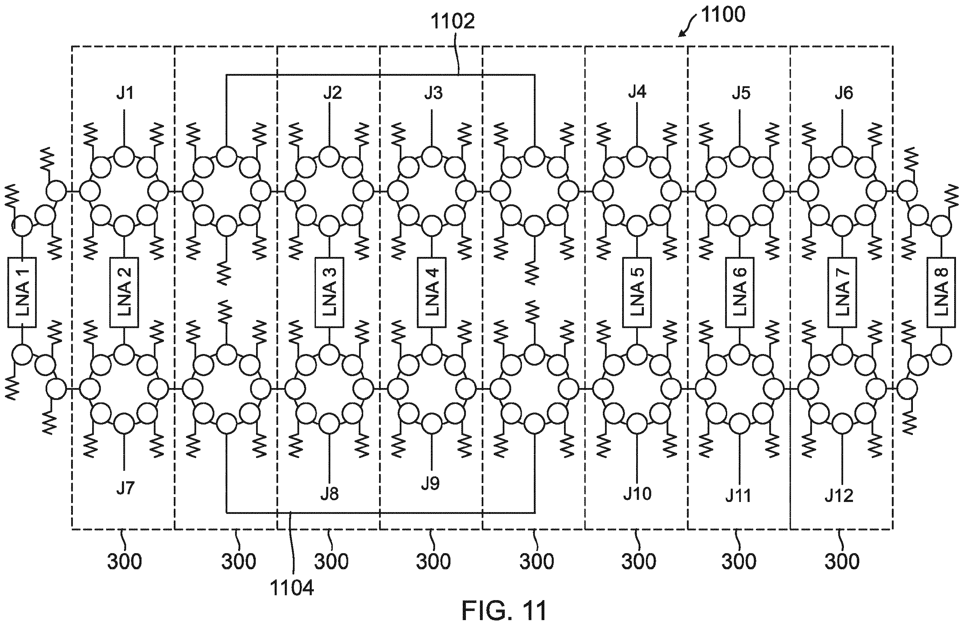

Figure 11 illustrates an 8 for 6 redundancy network 1100 that is similar to the redundancy network 210 in Figure 2A. However, in contrast to the redundancy network 210, the redundancy network 1100 includes a pair of path modules 300 having circulator modules that are not connected to components. Further in the pair of circulator modules 300 that lack components, the inputs and outputs of the path module 300 are coupled to one another through jumpers 1102 and 1104. The redundancy network 1100 is able to handle a first failure without disrupting working communication paths like the redundancy network 900 with the exception that the leads 1102 and 1104 allow for the reconfiguration of communication paths without requiring as many standby LNAs. Whereas redundancy network 900 requires 10 LNAs for the six communication paths, redundancy network 1100 only requires 8 LNAs for the six communication paths, resulting in cost savings.

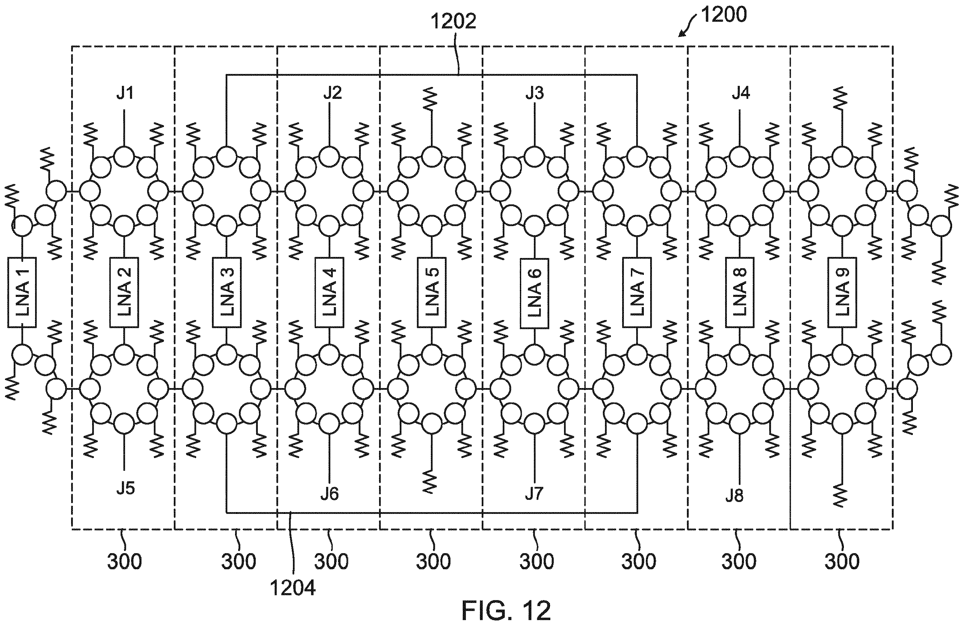

Figure 12 illustrates a 9 for 4 redundancy network 1200 that combines the alternating path modules described in Figure 10 with the connective leads 1102 and 1104 described in Figure 11. By including leads 1202 and 1204 with the alternating path modules having inputs and outputs and path modules with inputs and outputs terminating in loads, the redundancy network 1200 is able to reconfigure the circulators after three LNA failures without having to interrupt any of the operative communication paths. For example, LNA 2, LNA 1, and LNA 3 can fail in order, and the leads 1202 and 1204 allow the communication path from J1 to J5 to pass through LNA 7 without disrupting any of the other communication paths through the redundancy network 1200. Also, the leads 1202 and 1204 allow each communication path to experience up to 4 failures. Further, like the redundancy network 1000, the redundancy network 1200 is able to handle up to 5 total LNA failures. Based on the description above, when a redundancy network experiences a failure in a communication path, the path may be reconfigured without unduly impacting other operative communication paths.

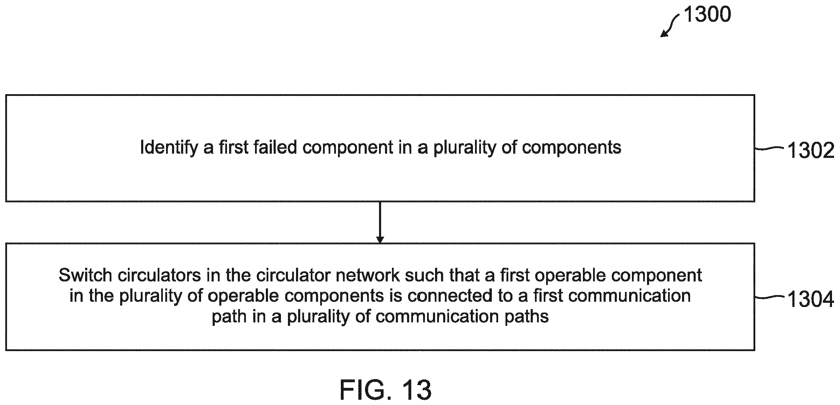

Figure 13 illustrates a flow diagram for a method 1300 for reconfiguring a redundancy network as described above. Method 1300 proceeds at 1302, where a first failed component is identified in a plurality of components. For example, a processor or circulator switch controller identifies that a component has failed in a path module through the redundancy network. Method 1300 proceeds at 1304, where circulators in the circulator network are switched such that a first operable component in the plurality of operable components is connected to a first communication path in a plurality of communication paths. As described herein, an operable component includes standby components that have not previously failed and active components that have yet to experience a failure and are currently part of active communication paths. Further, where a second failed component in the plurality of components is identified, where the second failed component is connected to a second communication path, circulators in the circulator network may be switched such that a second operable component in the plurality of operable components is connected to the second communication path. As described above, the switching of the operable components into their respective communication paths disrupts the communication paths for less time than the time used to switch the circulators used in the respective communication path.

### Example Embodiments

Example 1 includes a redundancy circulator network, the redundancy circulator network comprising: a first plurality of circulator modules, wherein the first plurality of circulator modules comprises: a first plurality of inputs, wherein signals pass through each input in the first plurality of inputs; a first plurality of outputs; and a first plurality of circulators configured to connect the first plurality of inputs to the first plurality of outputs; a second plurality of circulator modules, wherein the second plurality of circulator modules comprises: a second plurality of inputs; a second plurality of outputs, wherein signals pass through each output in the second plurality of outputs; and a second plurality of circulators configured to connect the second plurality of inputs to the second plurality of outputs; and a plurality of components coupled to the first plurality of outputs and coupled to the second plurality of inputs, wherein the first plurality of circulator modules and the second plurality of circulator modules are able to route a plurality of communication paths through the redundancy circulator network based on signals provided by a circulator switch controller coupled to the redundancy circulator network, wherein the plurality of components comprises a plurality of active components and a plurality of standby components, the plurality of standby components not being connected to a communication path, wherein a standby component in the one or more standby components that has not experienced a failure and an active component in the plurality of active components that has not experienced a failure are a plurality of operable components; wherein, when one or more components in the plurality of components fail and the failed one or more components are connected to one or more communication paths in the plurality of communication paths, the circulator switch controller reconfigures the redundancy circulator network such that one or more standby components in the plurality of standby components are connected to communication paths in the plurality of communication paths and the one or more communication paths are connected to an operable component in the plurality of operable components and the failed one or more components are disconnected from the plurality of communication paths, wherein the communication paths other than the one or more communication paths in the plurality of communication paths are disrupted for less than or equal to a single switching event.
Example 2 includes the redundancy circulator network of Example 1, wherein the one or more standby components comprises two standby components.
Example 3 includes the redundancy circulator network of Example 2, wherein each standby component in the one or more standby components are located on opposite sides of the redundancy circulator network.
Example 4 includes the redundancy circulator network of any of Examples 1-3, wherein a first pair of inputs in the first plurality of inputs in a first pair of circulator modules in the first plurality of circulator modules are coupled to each other through a jumper and a second pair of outputs in the second plurality of outputs in a second pair of circulator modules in the second plurality of circulator modules are coupled to each other through a jumper.
Example 5 includes the redundancy circulator network of Example 4, wherein a first pair of outputs in the first plurality of outputs in the first pair of circulator modules are terminated in a load and a second pair of inputs in the second plurality of inputs in the second pair of circulator modules are terminated in a load.
Example 6 includes the redundancy circulator network of any of Examples 4-5, wherein a first pair of outputs in the first plurality of outputs in the first pair of circulator modules are coupled to a standby component and a second pair of inputs in the second plurality of inputs in the second pair of circulator modules are coupled to a standby component.
Example 7 includes the redundancy circulator network of any of Examples 1-6, wherein two standby components in the plurality of standby components are separated from one another by an active component in the plurality of active components.
Example 8 includes the redundancy circulator network of any of Examples 1-7, wherein the circulator switch controller reconfigures a communication path that passes through a first component in the plurality of components such that the communication path passes through at least one of a second component next to a first side of the first component and a third component next to a second side of the first component, wherein other communication paths in the plurality of communication paths operate without interruption during the reconfiguration of the communication path.
Example 9 includes the redundancy circulator network of Example 8, wherein the circulator switch controller reconfigures a communication path that passes through the second component such that the communication path passes through at least one of the first component and the third component when a second component in the one or more components fails.
Example 10 includes the redundancy circulator network of any of Examples 8-9, wherein the circulator switch controller reconfigures a communication path that passes through the third component such that the communication path passes through at least one of the first component and the second component when a second component in the one or more components fails.
Example 11 includes a method for switching communication paths through a circulator network, the method comprising: identifying a first failed component in a plurality of components, wherein the first failed component is connected to a first communication path in a plurality of communication paths, wherein the plurality of components comprises one or more standby components that are not coupled to communication paths and one or more active components that are respectively coupled to one or more communication paths in the plurality of communication paths, wherein a standby component in the one or more standby components that has not previously failed and an active component in the one or more active components that has not experienced a failure are a plurality of operable components; switching circulators in the circulator network such that a first operable component in the plurality of operable components is connected to the first communication path in the plurality of communication paths and the failed component is disconnected from the first communication path, wherein the communication paths other than the first communication path in the plurality of communication paths are disrupted for less than or equal to a single switching event.
Example 12 includes the method of Example 11, further comprising: identifying a second failed component in the plurality of components; wherein the second failed component is connected to a second communication path in a plurality of communication paths; and switching circulators in the circulator network such that a second operable component in the plurality of operable components is connected to the second communication path in the plurality of communication paths and the second failed component is disconnected from the second communication path, wherein the communication paths other than the second communication path in the plurality of communication paths are disrupted for less than the time used to switch the circulators used in a respective communication path.
Example 13 includes the method of Example 12, wherein the first communication path and the second communication path are the same path.
Example 14 includes the method of any of Examples 11-13, wherein the one or more standby components comprise two components that are located on opposite sides of the circulator network.
Example 15 includes the method of any of Examples 11-14, wherein switching the circulators such that the first communication path is connected to an operable component comprises switching the circulators such that a signal passes through a first input to the circulator network to a second input in the circulator network through a jumper.
Example 16 includes the method of any of Examples 11-15, wherein two standby components in the plurality of standby components are separated from one another by an active component in the plurality of active components.
Example 17 includes the method of any of Examples 11-16, wherein switching the circulators such that the first communication path is connected to an operable component comprises switching the circulators such that the respective communication path passes through a first component in the plurality of components such that the communication path passes through at least one of a second component next to a first side of the first component and a third component next to a second side of the first component, wherein other communication paths in the plurality of communication paths operate without interruption during the reconfiguration of the communication path.
Example 18 includes the method of Example 17, wherein switching the circulators such that the first communication path is connected to an operable component comprise switching the circulators such that the respective communication path switches from passing through the second component through at least one of the first component and the third component when a second component in the plurality of components fails.
Example 19 includes the method of Example 17, wherein switching the circulators such that the first communication path is connected to an operable component comprise switching the circulators such that the respective communication path switches from passing through the third component through at least one of the first component and the second component when a second component in the plurality of components fails.
Example 20 includes an antenna array, the redundancy circulator network comprising: a first plurality of circulator modules, wherein the first plurality of circulator modules comprises: a first plurality of inputs, wherein signals pass through each input in the first plurality of inputs; a first plurality of outputs; and a first plurality of circulators configured to connect the first plurality of inputs to the first plurality of outputs; a second plurality of circulator modules, wherein the second plurality of circulator modules comprises: a second plurality of inputs, wherein signals pass through each output in the second plurality of outputs; a second plurality of outputs; and a second plurality of circulators configured to connect the second plurality of inputs to the second plurality of outputs; at least one circulator switch controller configured to control the direction of circulation for the first plurality of circulators and the second plurality of circulators; a plurality of components coupled to the first plurality of outputs and coupled to the second plurality of inputs, wherein the first plurality of circulator modules and the second plurality of circulator modules are able to route a plurality of communication paths through the redundancy circulator network based on signals provided by a circulator switch controller coupled to the redundancy circulator network, wherein the plurality of components comprises a plurality of active components and a plurality of standby components, the plurality of standby components not being connected to a communication path, wherein a standby component in the one or more standby components that has not experienced a failure and an active component in the plurality of active components that has not experienced a failure are a plurality of operable components; wherein, when one or more components in the plurality of components fail and the failed components are connected to one or more communication paths in the plurality of communication paths, the circulator switch controller reconfigures the redundancy circulator network such that one or more standby components in the plurality of standby components are connected to communication paths in the plurality of communication paths and the one or more communication paths are connected to an operable component in the plurality of operable components and the failed one or more components are disconnected from the plurality of communication paths, wherein the communication paths other than the one or more communication paths in the plurality of communication paths are disrupted for less than or equal to a single switching event; and an array of antenna elements, wherein the antenna elements are driven by signals that pass through the first plurality of circulator modules, a second plurality of circulator modules, and the plurality of components.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A redundancy circulator network (100), the redundancy circulator network (100) comprising:
a first plurality of circulator modules (103), wherein the first plurality of circulator modules (103) comprises:
a first plurality of inputs, wherein signals pass through each input in the first plurality of inputs;
a first plurality of outputs; and
a first plurality of circulators configured to connect the first plurality of inputs to the first plurality of outputs;
a second plurality of circulator modules (103), wherein the second plurality of circulator modules (103) comprises:
a second plurality of inputs;
a second plurality of outputs, wherein signals pass through each output in the second plurality of outputs; and
a second plurality of circulators configured to connect the second plurality of inputs to the second plurality of outputs; and
a plurality of components (108) coupled to the first plurality of outputs and coupled to the second plurality of inputs, wherein the first plurality of circulator modules (103) and the second plurality of circulator modules (103) are able to route a plurality of communication paths through the redundancy circulator network (100) based on signals provided by a circulator switch controller (110) coupled to the redundancy circulator network, wherein the plurality of components (108) comprises a plurality of active components and a plurality of standby components, the plurality of standby components not being connected to a communication path, wherein a standby component in the one or more standby components that has not experienced a failure and an active component in the plurality of active components that has not experienced a failure are a plurality of operable components;
wherein, when one or more components in the plurality of components (108) fail and the failed one or more components are connected to one or more communication paths in the plurality of communication paths, the circulator switch controller (110) reconfigures the redundancy circulator network (100) such that one or more standby components in the plurality of standby components are connected to communication paths in the plurality of communication paths and the one or more communication paths are connected to an operable component in the plurality of operable components and the failed one or more components are disconnected from the plurality of communication paths, wherein the communication paths other than the one or more communication paths in the plurality of communication paths are disrupted for less than or equal to a single switching event.

2. The redundancy circulator network (100) of claim 1, wherein the one or more standby components comprises two standby components.

3. The redundancy circulator network (100) of claim 2, wherein each standby component in the one or more standby components are located on opposite sides of the redundancy circulator network.

4. The redundancy circulator network (100) of claim 1, wherein a first pair of inputs in the first plurality of inputs in a first pair of circulator modules in the first plurality of circulator modules are coupled to each other through a jumper and a second pair of outputs in the second plurality of outputs in a second pair of circulator modules in the second plurality of circulator modules are coupled to each other through a jumper.

5. The redundancy circulator network (100) of claim 4, wherein a first pair of outputs in the first plurality of outputs in the first pair of circulator modules are terminated in a load and a second pair of inputs in the second plurality of inputs in the second pair of circulator modules are terminated in a load.

6. The redundancy circulator network (100) of claim 4, wherein a first pair of outputs in the first plurality of outputs in the first pair of circulator modules are coupled to a standby component and a second pair of inputs in the second plurality of inputs in the second pair of circulator modules are coupled to a standby component.

7. The redundancy circulator network (100) of claim 1, wherein two standby components in the plurality of standby components are separated from one another by an active component in the plurality of active components.

8. The redundancy circulator network (100) of claim 1, wherein the circulator switch controller reconfigures a communication path that passes through a first component in the plurality of components such that the communication path passes through at least one of a second component next to a first side of the first component and a third component next to a second side of the third component of the first component, wherein other communication paths in the plurality of communication paths operate without interruption during the reconfiguration of the communication path.

9. A method for switching communication paths through a circulator network (100), the method comprising:
identifying a first failed component in a plurality of components (108), wherein the first failed component is connected to a first communication path in a plurality of communication paths, wherein the plurality of components (108) comprises one or more standby components that are not coupled to communication paths and one or more active components that are respectively coupled to one or more communication paths in the plurality of communication paths, wherein a standby component in the one or more standby components that has not previously failed and an active component in the one or more active components that has not experienced a failure are a plurality of operable components;
switching circulators in the circulator network (100) such that a first operable component in the plurality of operable components is connected to the first communication path in the plurality of communication paths and the failed component is disconnected from the first communication path, wherein the communication paths other than the first communication path in the plurality of communication paths are disrupted for less than or equal to a single switching event.

10. The method of claim 9, further comprising:
identifying a second failed component in the plurality of components (108); wherein the second failed component is connected to a second communication path in a plurality of communication paths; and
switching circulators in the circulator network (100) such that a second operable component in the plurality of operable components is connected to the second communication path in the plurality of communication paths and the second failed component is disconnected from the second communication path, wherein the communication paths other than the second communication path in the plurality of communication paths are disrupted for less than the time used to switch the circulators used in a respective communication path.
